# EUROPEAN PATENT APPLICATION

(11) **EP 2 843 254 A2**
(43) Date of publication of application: **04.03.2015**
(21) Application number: 14173518.3
(22) Date of filing: 23.06.2014
(51) Int. Cl.: F16D 55/00, F16D 65/12, F16C 33/76

(54) **Bearing unit**

(30) Priority: 01.07.2013 JP 2013137881
(71) Applicant: JTEKT CORPORATION, Osaka-shi Osaka 542-8502 (JP)
(72) Inventor: Inoue, Yuya, Osaka-shi,, Osaka 542-8502 (JP); Yamane, Shinji, Osaka-shi,, Osaka 542-8502 (JP)
(74) Representative: Winter, Brandl, Fürniss, Hübner, Röss, Kaiser, Polte - Partnerschaft mbB

(57) **Abstract**

A dust cover (1) disposed on an outer periphery of an outer ring member (2) of a bearing unit (H) has a generally disc shape as viewed from an axial direction of the bearing unit. The dust cover has an outside ring portion (1b), a short cylinder portion (1c) that extends toward an outboard side from an inner peripheral edge of the outside ring portion, and an inside ring portion (1d) that extends radially inward from a distal end of the short cylinder portion. A partition (19) that restricts entry of muddy water into a vicinity of a seal member (4b) located on the outboard side is provided on an upper portion of an outer peripheral face of the short cylinder portion of the dust cover. A drain opening (20) through which the muddy water is drained to an outside is formed in the short cylinder portion, at a position on an inboard side of the partition.

## Description

### BACKGROUND OF THE INVENTION

### 1. Field of the Invention

The invention relates generally to a bearing unit, and more specifically to a bearing unit in which a dust cover is fitted on the outer periphery of an outer ring member.

### 2. Description of the Related Art

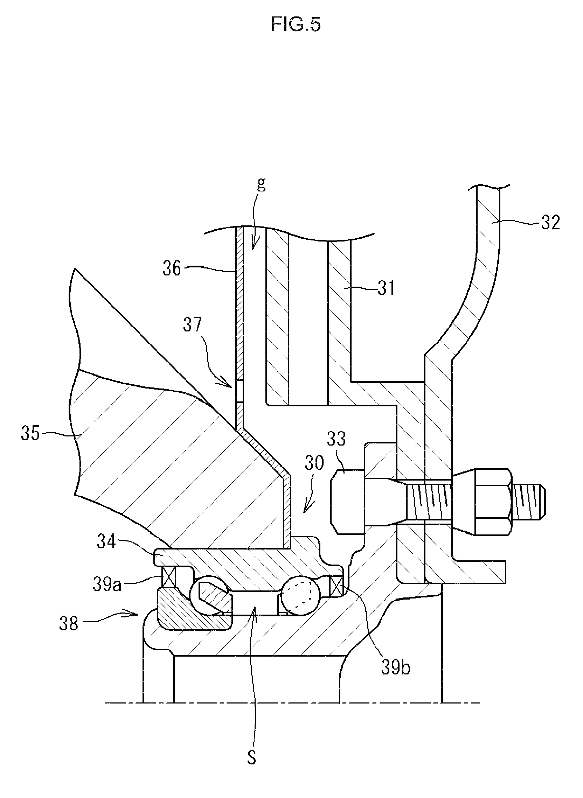

A bearing unit is used to support a wheel of a vehicle such that the wheel is rotatable relative to a suspension system of a vehicle body. In a conventional commonly-used bearing unit, as illustrated in FIG. 5, a hub unit 30, a brake rotor 31 and a wheel 32 are coupled together with fixing bolts 33. An outer ring member 34 included in the hub unit 30 is secured to a vehicle body-side member via a knuckle 35. The knuckle 35 is coupled to a flange formed on the outer periphery of the outer ring member 34.

A dust cover 36 having a generally disc-shape as viewed from the axial direction of the bearing unit is disposed around the outer periphery of the outer ring member 34 in order to prevent road debris from hitting a sliding surface of the brake rotor 31 while the vehicle is travelling. The dust cover 36 is held between the flange of the outer ring member 34 and the knuckle 35. The dust cover 36 has a plurality of air inlets 37 arranged along the circumferential direction of the bearing unit. The air inlets 37 are used to air-cool the brake rotor 31 in order to prevent overheating of the brake rotor 31.

Seal members 39a, 39b are respectively disposed at the opposite ends of an annular space S defined between the outer ring member 34 and an inner ring member 38 that constitute the hub unit 30, in order to prevent mainly foreign matter (muddy water, fine dust or the like) from the outside from entering the bearing. Out of the seal members 39a, 39b, the seal member 39b located on the outboard side (the outer side in the vehicle lateral direction; the right side in FIG. 5) serves an important function in preventing muddy water splashed by a rotating tire from entering the bearing.

However, in the above-described conventional technology, muddy water may enter the hub unit 30 through a clearance g between the dust cover 36 and the brake rotor 31. Further, muddy water may enter the hub unit 30 through the air inlets 37 for air-cooling of the brake rotor 31.

As described above, the seal member 39b that blocks muddy water is disposed at an outboard-side position of the hub unit 30. However, if the amount of muddy water that enters the vicinity of the seal member 39b increases, the sealing function of the seal member 39b becomes insufficient, which causes a possibility that the muddy water will enter the bearing. If the muddy water enters the bearing, the grease in the bearing deteriorates. If foreign matter enters the bearing, the flaking life of the bearing is shortened, or indentations may be formed in the bearing. As a result, abnormal noise is generated.

### SUMMARY OF THE INVENTION

One object of the invention is to provide a bearing unit configured such that entry of muddy water into the vicinity of a seal member is restricted.

An aspect of the invention relates to a bearing unit including: a hub unit including an outer ring member secured to a vehicle body-side member via a knuckle, an inner ring member rotatably passed through an inside of the outer ring member, and seal members respectively arranged at opposite ends of an annular space defined between the outer ring member and the inner ring member; and a dust cover disposed on an outer periphery of the outer ring member, and having a generally disc shape as viewed from an axial direction of the bearing unit. The dust cover has an outside ring portion, a short cylinder portion that extends toward an outboard side from an inner peripheral edge of the outside ring portion, and an inside ring portion that extends radially inward from a distal end of the short cylinder portion. A partition that restricts entry of muddy water into a vicinity of the seal member located on the outboard side is provided on an upper portion of an outer peripheral face of the short cylinder portion of the dust cover. A drain opening through which the muddy water is drained to an outside is formed in the short cylinder portion, at a position on an inboard side of the partition.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a partial sectional view illustrating a bearing unit according to an embodiment of the invention;
FIG. 2 is a perspective explanatory view of a dust cover in FIG. 1;
FIG. 3A and FIG. 3B are each an explanatory view illustrating an example of a method of manufacturing the dust cover in FIG. 1;
FIG. 4 is a partial sectional view illustrating a bearing unit according to another embodiment of the invention; and
FIG. 5 is a partial sectional view illustrating a conventional bearing unit.

### DETAILED DESCRIPTION OF EMBODIMENTS

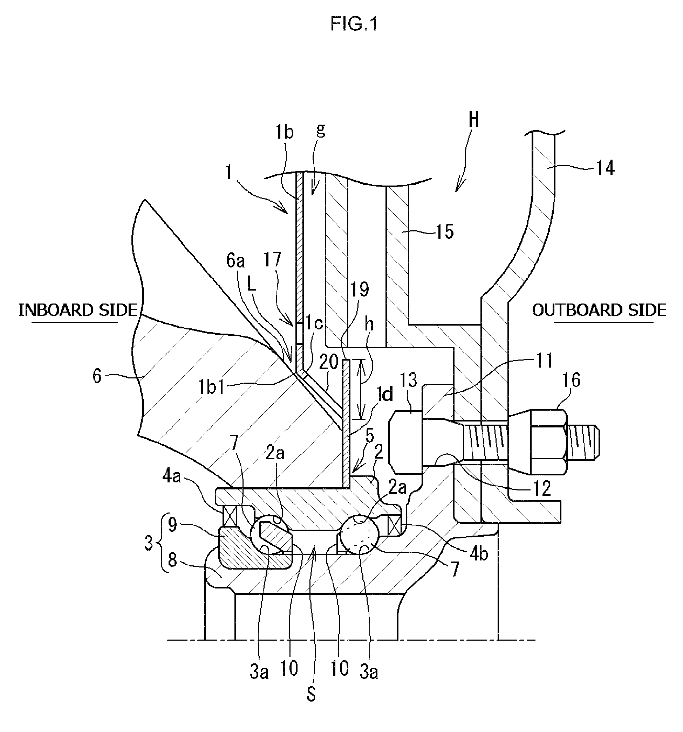

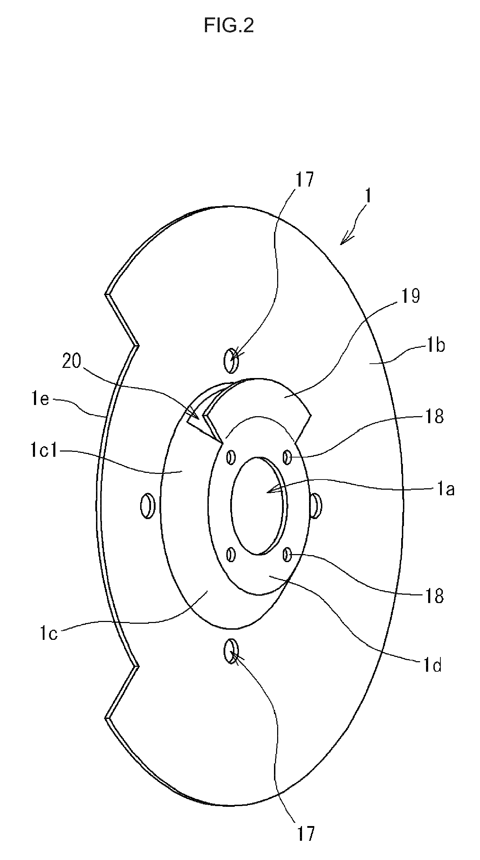

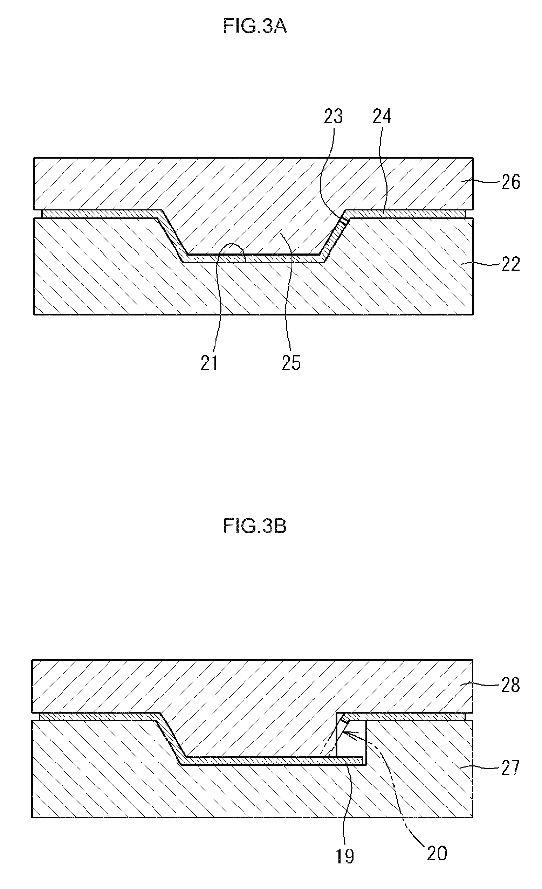

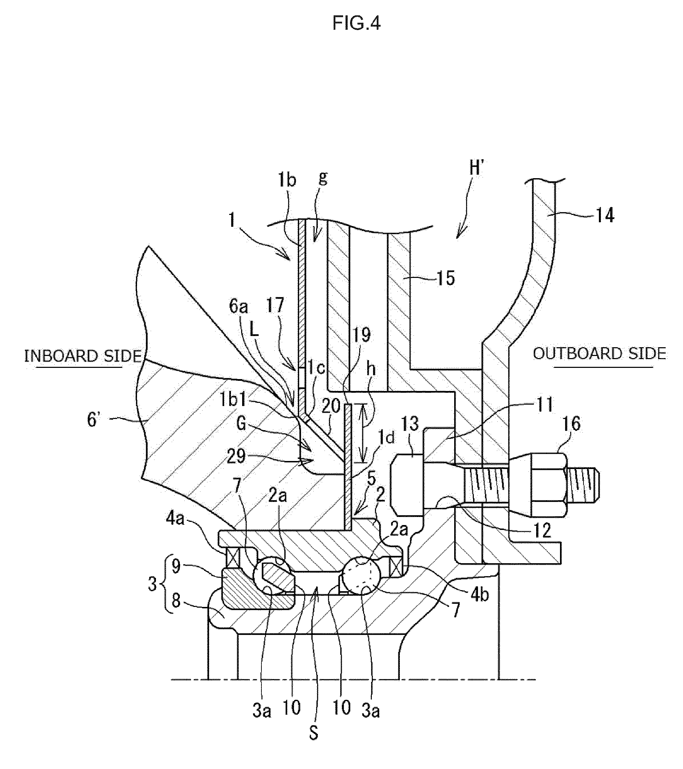

Hereinafter, a bearing unit H according to an embodiment of the invention will be described with reference to the accompanying drawings. FIG. 1 is a partial sectional view illustrating the bearing unit H according to the embodiment of the invention. FIG. 2 is a perspective explanatory view of a dust cover 1 in FIG. 1. FIG. 3A and FIG. 3B are each an explanatory view illustrating an example of a method of manufacturing the dust cover 1 in FIG. 1. In FIG. 1 and FIG. 4 (described later), the left side is the inboard side and the right side is the outboard side.

The bearing unit H in the present embodiment is an axle bearing unit disposed on the drive wheel side in a vehicle. The bearing unit H includes a hub unit 5 and the dust cover 1. The hub unit 5 includes an outer ring member 2, an inner ring member 3 and seal members 4a, 4b. The outer ring member 2 is secured to a vehicle body-side member. The inner ring member 3 is rotatably passed through the outer ring member 2. The seal members 4a, 4b are respectively disposed at the opposite ends of an annular space S defined between the outer ring member 2 and the inner ring member 3. The dust cover 1 is disposed around the outer periphery of the outer ring member 2.

The outer ring member 2 is secured to the vehicle body-side member via a knuckle 6. The outer ring member 2 has double-row outer ring raceway surfaces 2a at its inner peripheral face. The inner ring member 3 has, at its outer peripheral face, inner ring raceway surfaces 3a opposed to the outer ring raceway surfaces 2a. Balls 7, which serve as rolling elements, are disposed between the outer ring raceway surfaces 2a and the inner ring raceway surfaces 3a.

The inner ring member 3 is formed of a hub shaft 8 and an inner ring component 9. The hub shaft 8 is rotatably supported by the outer ring member 2 via the balls 7 arranged in double row. The inner ring component 9 is an independent member fitted on the outer periphery of an inboard-side end portion of the hub shaft 8.

The balls 7 are retained on the inner ring raceway surfaces 3a by a cage 10 at prescribed intervals in the circumferential direction. The opposite ends of the annular space S defined between the outer ring member 2 and the inner ring member 3 are sealed by the seal members 4a, 4b. The seal members 4a, 4b are disposed in order to prevent mainly foreign matter (muddy water or fine dust) from entering the bearing from the outside. Out of the seal members 4a, 4b, the seal member 4b located on the outboard side serves an important function in preventing muddy water splashed by a rotating tire from entering the bearing.

A vehicle wheel attachment flange 11 used to attach a vehicle wheel to the bearing unit H is formed on the outer periphery of the outboard-side end portion of the hub shaft 8. Bolt holes 12 are formed in an outer peripheral portion of the vehicle wheel attachment flange 11 at prescribed intervals. A wheel 14 and a brake rotor 15, which are vehicle wheel-side components, are attached to fixing bolt 13 that are press-fitted into the bolt holes 12. Both the wheel 14 and the brake rotor 15 are fastened together by nuts 16.

The dust cover 1 has a generally disc shape as viewed from the axial direction of the bearing unit H, and has a hole 1a at its center, as illustrated in FIG. 2. The dust cover 1 is formed of three portions, that is, an outside ring portion 1b, a short cylinder portion 1c and an inside ring portion 1d. The short cylinder portion 1c extends toward the outboard side from the inner peripheral edge of the outside ring portion 1b. The inside ring portion 1d extends radially inward from the distal end of the short cylinder portion 1c. The outside ring portion 1b and the inside ring portion 1d extend substantially parallel to each other, and are perpendicular to the central axis of the bearing unit H. The short cylinder portion 1c is tapered toward the outboard side. A cutout 1e formed in a peripheral edge portion of the outside ring portion 1b is a cut portion for receiving a caliper (not illustrated).

Air inlets 17 are formed in an inner peripheral portion of the outside ring portion 1b so as to be arranged at prescribed intervals (intervals of 90 degrees in the present embodiment) along the circumferential direction of the outside ring portion 1b. Air for cooling the brake rotor 15 flows through the air inlets 17. Thus, the air is supplied to the brake rotor 15 through the air inlets 17. Thus, it is possible to prevent overheating of the brake rotor 15. The shape, the number and the arrangement of the air inlets 17 are not particularly limited in the invention, and may be selected as needed.

Bolt holes 18 are formed in the inside ring portion 1d so as to be arranged at prescribed intervals (intervals of 90 degrees in the present embodiment) along the circumferential direction of the inside ring portion 1d. The dust cover 1 is secured to a flange (not illustrated) formed on the outer periphery of the outer ring member 2 with bolts passed through the bolt holes 18 such that the dust cover 1 is interposed between the knuckle 6 and the flange.

In the present embodiment, a partition 19 is provided on an upper portion (upper side in FIG. 1 and FIG. 2) of an outer peripheral face 1c1 of the short cylinder portion 1c of the dust cover 1. The partition 19 has a generally strip-shape or a rectangular shape as viewed from the axial direction. A height h of the partition 19 is not particularly limited in the invention. A generally rectangular drain opening 20 is formed in the short cylinder portion 1c at a position on the inboard side of the partition 19.

As illustrated in FIG. 1, the partition 19 is located on a path through which muddy water, which has dropped through a clearance g defined between the dust cover 1 and the brake rotor 15, is introduced toward the hub unit 5, and also located on a path through which muddy water, which has passed through the air inlets 17 of the dust cover 1, is introduced toward the hub unit 5. By disposing the partition 19 at the aforementioned position, the muddy water is blocked by the partition 19. Thus, entry of the muddy water into the vicinity of the seal member 4b is restricted. Further, the drain opening 20 is formed in the short cylinder portion 1c at a position on the inboard side of the partition 19. Thus, it is possible to discharge the muddy water blocked by the partition 19 to the outside through the drain opening 20.

By restricting the amount of muddy water that enters the vicinity of the seal member 4b, the sealing function of the seal member 4b is maintained in satisfactory conditions. As a result, it is possible to prevent the muddy water from entering the inside of the bearing. Thus, deterioration of the grease caused by the muddy water that has entered the inside of the bearing is prevented. Further, entry of foreign matter into the bearing is also prevented. Thus, it is possible prevent reduction in the flaking life of the bearing and formation of indentations.

In the present embodiment, the dust cover 1 is disposed such that an inner peripheral edge 1b1 of the outside ring portion 1b is opposed to and located in the vicinity of the a surface 6a of the knuckle 6. Thus, a labyrinth seal L is formed by the inner peripheral edge 1b1 of the outside ring portion 1b and the surface 6a of the knuckle 6. As a result, the muddy water is restrained from flowing through a space between the knuckle 6 and the dust cover 1, flowing through the drain opening 20 from the lower side to the upper side in FIG. 1, and entering the vicinity of the seal member 4b.

The dust cover 1 may be manufactured by subjecting, for example, an austenite stainless steel sheet or an anticorrosive cold rolled carbon steel sheet to press working. FIG. 3A and FIG. 3B are explanatory views that illustrate an example of a method of manufacturing the dust cover 1. FIG. 3A illustrates a first step. In the first step, a plate 24 is set on a first lower punch 22. The lower punch 22 has a recess 21 that has a shape corresponding to the shape of the short cylinder portion 1c and that is formed at the center of the first lower punch 22. A cut 23 that has a shape corresponding to the shape of the partition 19 is formed in the plate 24 in advance. Then, a first upper punch 26 is lowered to form the outline shape of the dust cover 1. The first upper punch 26 has, at its center, a protrusion 25 having a shape corresponding to the shape of the short cylinder portion 1c.

FIG. 3B illustrates a second step. In the second step, the dust cover 1 formed in the first step is set in a second lower punch 27. Then, a second upper punch 28 is lowered to form the air inlets 17 and the bolt holes 18, while the part in which the cut 23 is formed in advance is bent to form the partition 19. At the same time that the partition 19 is formed, the drain opening 20 is formed. Thus, the partition 19 and the drain opening 20 are formed easily. The partition 19 is formed so as to be substantially flush with the inside ring portion 1d.

FIG. 4 is a partial sectional view illustrating a bearing unit H' according to another embodiment of the invention. In the present embodiment, a drain recessed portion 29 is formed in a surface of a knuckle 6', which is opposed to the short cylinder portion 1c of the dust cover 1. This recessed portion 29 is formed along the vehicle longitudinal direction (direction perpendicular to a sheet on which FIG. 4 is drawn), as illustrated in FIG. 4. A drain groove G is defined between the recessed portion 29 and the inside ring portion 1d of the dust cover 1. With the formation of the drain groove G that is located below the drain opening 20, the muddy water that has passed through the drain opening 20 is drained more efficiently. In the embodiment illustrated in FIG. 4, the same components and elements as those in the embodiment illustrated in FIG. 1 are denoted by the same reference symbols as those in the embodiment illustrated in FIG. 1, and description thereof will be omitted.

It should be considered that the embodiments described in this specification are mere examples of the invention, at any points, and accordingly, the invention should not be limited only to these embodiments. The scope of the invention is defined by the appended claims and includes various modifications in the meaning of equivalence to the claims and the scope defined by the claims.

For example, in the embodiment described above, the partition 19 and the drain opening 20 are formed at the same time by subjecting the plate 24 to press working. However, there may be employed a method in which a drain opening alone is formed by pressing working, and then the partition that is separately formed is attached to the short cylinder portion of the dust cover by welding, bonding or the like. In this case, the shape and the position of the partition 19 may be selected as needed.

In the above-described embodiments, the balls 7 are used as rolling elements. However, tapered rollers may be used as rolling elements. In the above-described embodiments, the invention is applied to the axle bearing unit disposed on the drive-wheel side in the vehicle. However, the invention may be applied to an axle bearing unit disposed on the driven-wheel side in the vehicle.

With the bearing unit according to the invention, it is possible to restrict entry of muddy water into the vicinity of the seal member.

## Claims

1. A bearing unit comprising:
a hub unit including an outer ring member secured to a vehicle body-side member via a knuckle, an inner ring member rotatably passed through an inside of the outer ring member, and seal members respectively arranged at opposite ends of an annular space defined between the outer ring member and the inner ring member; and
a dust cover disposed on an outer periphery of the outer ring member, and having a generally disc shape as viewed from an axial direction of the bearing unit, wherein
the dust cover has an outside ring portion, a short cylinder portion that extends toward an outboard side from an inner peripheral edge of the outside ring portion, and an inside ring portion that extends radially inward from a distal end of the short cylinder portion,
a partition that restricts entry of muddy water into a vicinity of the seal member located on the outboard side is provided on an upper portion of an outer peripheral face of the short cylinder portion of the dust cover, and
a drain opening through which the muddy water is drained to an outside is formed in the short cylinder portion, at a position on an inboard side of the partition.

2. The bearing unit according to claim 1, wherein the dust cover is disposed such that the inner peripheral edge of the outside ring portion is located in a vicinity of and opposed to a surface of the knuckle to define a labyrinth seal between the inner peripheral edge of the outer ring member and the surface of the knuckle.

3. The bearing unit according to claim 1 or 2, wherein the partition of the dust cover is formed by cutting and raising a part of a plate from which the dust cover is formed, and the drain opening is an opening that is formed in the plate by cutting and raising the part of the plate.
